(19) Europäisches Patentamt
European Patent Office
Office européen des brevets

(11) EP 1 157 462 B1

(12) **EUROPEAN PATENT SPECIFICATION**

(45) Date of publication and mention of the grant of the patent:
**07.04.2004 Bulletin 2004/15**

(21) Application number: **00920462.9**

(22) Date of filing: **24.02.2000**

(51) Int Cl.[7]: **H03J 7/02**

(86) International application number:
**PCT/EP2000/001761**

(87) International publication number:
**WO 2000/051236 (31.08.2000 Gazette 2000/35)**

(54) **METHOD AND APPARATUS FOR FREQUENCY SYNCHRONISATION IN A DIGITAL RADIO COMMUNICATIONS SYSTEM**

VERFAHREN UND VORRICHTUNG ZUR FREQUENZSYNCHRONISIERUNG IN EINEM DIGITALEN NACHRICHTENÜBERTRAGUNGSSYSTEM

PROCEDE ET APPAREIL DE SYNCHRONISATION DE FREQUENCE DANS DES SYSTEMES DE COMMUNICATIONS RADIO NUMERIQUES

(84) Designated Contracting States:
**AT BE CH CY DE DK ES FI FR GB GR IE IT LI LU MC NL PT SE**

(30) Priority: **24.02.1999 GB 9904161**

(43) Date of publication of application:
**28.11.2001 Bulletin 2001/48**

(73) Proprietor: **Motorola Limited**
**Basingstoke, Hampshire RG22 4PD (GB)**

(72) Inventor: **AFTELAK, Andrew John**
**Basingstoke, Hampshire RG24 8YD (GB)**

(74) Representative: **Treleven, Colin**
**Motorola European Intellectual Property Operations,**
**Midpoint,**
**Alencon Link**
**Basingstoke, Hampshire RG21 7PL (GB)**

(56) References cited:
**US-A- 4 599 732**
**US-A- 5 343 498**

EP 1 157 462 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

Printed by Jouve, 75001 PARIS (FR)

## Description

### Technical Field

The invention relates to the field of radio communications. The invention relates particularly, but not exclusively, to mobile radio communications.

### Background

Mobile radio communications systems generally comprise a number of mobile or portable radio units. The radio units in a public- or private mobile radio communications system are often referred to as 'mobile stations'. The infrastructure of the communications system includes 'base stations'. The base stations are fixed nodes through which the mobile stations can communicate.

Normally, a mobile station is within communication range of a base station of the communication system's infrastructure. In this case, the mobile station will communicate through the base station, this mode of operation typically being termed 'trunked mode'. However, some mobile radio communication systems allow an individual mobile station to set up a direct radio link to another mobile station, without the communication link passing through the infrastructure of the communication system. This form of communication between two mobile stations is referred to as 'direct mode' operation.

Mobile stations operating in direct mode have to receive radio signals that typically show greater variation in their parameters than radio signals received from the infrastructure of the communications system. This is because of differences in the signals transmitted from a mobile station in comparison to those from a base station of the infrastructure. For example,

a) A mobile station may only transmit with low or variable power;
b) A mobile will typically have a lower quality internal clock than a base station;
c) A mobile may be moving, but a base station is stationary, movement of the mobile introducing characteristics such as Rayleigh fading to the signal;
d) A mobile may suffer interruption of its transmission due to passing by an obstruction, low power or poor battery contacts. As these factors don't affect a base station, the base station will suffer interruption of its broadcast signal less often.

The information carried by any digital communications system can be recovered only after the receiver has first synchronised to the received signal. The high frequency signal reaching the receiver will be at a frequency that depends on the frequency of an oscillator in the transmitter. A further oscillator in the receiver is used to down-convert the high frequency received signal. Because the oscillators in the transmitter and the receiver do not work at precisely the same frequency, the down-converted signal in the receiver has a slightly different frequency than that which would arise if the two oscillators had identical frequencies. This mismatch is what gives rise to the need for a synchronisation circuit in the receiver, to 'compensate' for the down-converted signal not having its ideal, theoretical frequency value.

Thus there is a need in a mobile digital radio system for synchronisation in the radio receiver. The state of synchronisation between the receiver and the received signal is often referred to simply as 'lock'. Factors a)-d) above make the need for accurate synchronisation, and recognition of synchronisation, particularly important for direct mode operation of mobile stations.

In the Terrestrial Trunked radio system (TETRA), direct mode operation is permitted, allowing communication between two subscriber units without the intervention of an infrastructure. A direct mode call is set up by sending two frames (8 slots) of synchronisation bursts, which last for 113 msec. It is important for fast and reliable call set-up that the subscriber unit detects the call set-up message, synchronises to it and decodes data as soon as possible.
In terms of the requirements on the automatic frequency correction (AFC) algorithm in the receiving radio, the radio needs to start decoding data well before a traditional AFC loop would be able to lock in on the signal.

A prior art arrangement has proposed measuring the frequency offset of each of the first few slots of a direct mode call after the call has been detected, and correcting the frequency offset on a slot by slot basis. This is essentially a 'feed-forward' technique. For the first received slot, the only way to correct the frequency offset sufficiently accurately to be able to decode data is to measure the offset from that slot of data, and correct for the offset. This correction is feed-forward correction. At the same time, the frequency estimates are fed into a feedback loop, which eventually locks to the received carrier frequency. When the feedback loop locks, the AFC is handed over from signal acquisition mode to tracking mode. From the time of this hand-over onwards, the receiver merely tracks the signal that it receives.

A direct mode radio receiver must synchronise so rapidly, that for AFC to work, it is not a practical option to wait until the tracking loop has acquired the signal. The tracking loop may in fact take several seconds to acquire the

signal.

Figure 1 shows a feed-forward correction of frequency offset. The frequency offset estimator is element 2. The estimate of frequency offset is provided on an output 4 to a frequency corrector 6. In operation, frequency corrector 6 uses a frequency offset estimate derived for the nth slot of data of a received radio signal to correct the frequency of the same, nth, slot of data.

Following treatment of the signal as shown in figure 1, the frequency estimates from the first and subsequent slots are fed to a loop filter in a feedback tracking loop. However, the problem is how to correct the frequency offset of next slots before handing over to the tracking loop.

One solution known from the prior art is to break the feedback loop at first, and make estimates of the frequency offsets, which are averaged from slot to slot. A feed-forward correction is made to each slot of data using the averaged estimate. After a predefined number of slots, the averaged estimates are applied as a one-off correction to the reference oscillator and the feedback loop is connected and starts tracking. The advantage of this method is that the estimates of frequency applied in the feed-forward loop are averaged, and they therefore get better in terms of signal to noise ratio as time goes on. The problem with this method is that while the feed-forward corrections are being made, the received signal is not being drawn into the centre of the matched filter of the tracking loop, and therefore the data will be detected with an increased error rate.

An alternative to this arrangement is simply to allow the feedback loop to operate from the first slot, but to apply the slot by slot estimates as feed-forward corrections to each slot. The signal is now being drawn into the centre of the matched filter of the tracking loop. The disadvantage of this approach is however that the one-off estimates are prone to a large variance.

A need exists to alleviate problems of the arrangements known from the prior art. One particular problem addressed by the present invention is to attain the best performance of the frequency corrector between the reception of the first slot of data and the hand-over to tracking mode. By ensuring the best performance of the AFC during the first few slots of received data, the probability of correctly decoding and therefore setting up the call is also maximised.

US-A-5343498 is a known prior art document, relating to synchronisation in a radio system.

## Summary of the Invention

A frequency synchronisation circuit in accordance with the present invention is suitable for use in a digital radio communications system. The frequency synchronisation circuit comprises:

(i) a frequency offset estimator, supplied with a received radio signal, for providing an estimate of the frequency offset of a slot of data in the received radio signal, the slot of data being slot number n in a sequence of slots of data in the received radio signal;

(ii) a frequency estimate smoother, connected to the frequency offset estimator and receiving the estimate of the frequency offset of the n th slot of data in the received radio signal, for providing a smoothed estimate of frequency offset;

(iii) a frequency corrector, connected to the frequency estimate smoother, the frequency estimate smoother feeding forward the smoothed estimate of frequency offset to the frequency corrector, for correcting the frequency of the nth slot of data;

(iv) a feedback loop, connected to the frequency offset estimator, for feeding back the estimate of the frequency offset via a filter to a multiplier, the multiplier also receiving the received radio signal;

(v) the output of the multiplier providing the input to the frequency offset estimator;

wherein the frequency estimate smoother is adapted to compensate the smoothed estimate of frequency offset for estimates of the frequency offset fed back in the feedback loop in response to slots of the received radio signal prior to the nth slot.

The invention further comprises a method of frequency synchronisation for digital radio communications. The method of frequency synchronisation comprises:

(i) estimating the frequency offset of a slot of data in a received radio signal, the slot of data being slot number n in a sequence of slots of data in the received radio signal, to provide an estimate of the frequency offset of the nth slot of data in the received radio signal;

(ii) smoothing the estimate of the frequency offset of the nth slot of data in the received radio signal, to provide a smoothed estimate of frequency offset;

(iii) feeding forward the smoothed estimate of frequency offset to a frequency corrector, for correcting the frequency of the nth slot of data;

(iv) in a feedback loop, connected to the frequency offset estimator, feeding back the estimate of the frequency

offset via a filter to a multiplier, the multiplier also receiving the received radio signal, the output of the multiplier providing the input to the frequency offset estimator;

wherein the step of smoothing the estimate of frequency offset comprises compensating for estimates of the frequency offset fed back in the feedback loop in response to slots of the received radio signal prior to the nth slot.

The frequency estimate smoother may be adapted to provide, in response to receiving the estimate of the frequency offset of the nth slot, a value $y_n$ as the smoothed estimate of frequency offset, where

$$yn = \left( \sum_{i=0}^{n} x_i - nf_{n-1} + \sum_{i=0}^{n-2} f_i \right) \Big/ (n+1)$$

Here $x_i$ is the ith estimate of the frequency offset, and $f_i$ is the ith frequency output of an oscillator in the feedback loop.

The frequency synchronisation circuit and method of the invention provide very rapid synchronisation of the receiver to the received signal. This has particular advantages for direct mode radio operation.

## Brief description of the drawings

Figure 1 shows a basic prior art arrangement for feed-forward correction of frequency offset.

Figure 2 shows an embodiment of the apparatus of the invention, in particular a tracking and feed-forward loop using an estimate smoother.

Figure 3 illustrates a method in accordance with the invention in the form of a flow-chart.

## Detailed description of the preferred embodiment

Figure 2 shows a block diagram of one embodiment of a smoothed estimate loop in accordance with the present invention. The embodiment of figure 2 is a tracking and feed-forward loop using an estimate smoother.

The input to the circuit of figure 2 is a received radio signal that has been reduced to base-band frequency. This signal will have a residual frequency offset, caused by a mismatch between the operating frequencies of the oscillator in the transmitter that broadcasts the signal and the oscillator in the receiver's down-converter section. The circuit of figure 2 will act to compensate for this frequency mismatch.

In particular, the invention as shown in figure 2 provides a frequency synchronisation circuit 10 for a digital radio communications system. The frequency synchronisation circuit comprises a frequency offset estimator 12. Frequency offset estimator 12 is supplied on input 34 with a received radio signal and provides an estimate of the frequency offset of a slot of data in the received radio signal. The slot of data is slot number n in a sequence of slots of data in the received radio signal. Frequency offset estimator 12 provides the estimate of frequency offset on its output 14.

A frequency estimate smoother 16 is connected to the frequency offset estimator 12. The frequency estimate smoother 16 receives the estimate of the frequency offset of the n th slot of data in the received radio signal from the frequency offset estimator 12. The smoother 16 provides a smoothed estimate of frequency offset on its output 18.

A frequency corrector 20 is connected to the frequency estimate smoother. The frequency estimate smoother 16 feeds forward the smoothed estimate of frequency offset to the frequency corrector 20. The frequency corrector 20 corrects the frequency of the nth slot of data, providing a corrected output on output 22.

As can be seen from figure 2, the output 14 of frequency offset estimator 12 is connected to a feedback loop 24, 26. The feedback loop 24, 26 feeds back the estimate of the frequency offset via a filter 24 and oscillator 26 to a multiplier 28.

The multiplier 28 receives both the signal from the feedback loop and the input to the circuit of figure 2, the received radio signal that has been reduced to base-band frequency.

The output of the multiplier 28 provides the input to the frequency offset estimator 12.

Also shown in Figure 2 are a matched filter 30 and a differential decoder 32, placed in series between the mixer 28 and the frequency offset estimator 12. These are known components of synchronisation circuits in digital radio communications receivers.

The output of the circuit of figure 2 is supplied to a data detector, which is not shown in the figure. The data detector is of a construction known to the person skilled in the art of radio receiver technology.

In accordance with the invention, frequency estimate smoother 16 is adapted to compensate the smoothed estimate of frequency offset for estimates of the frequency offset fed back in the feedback loop in response to slots of the received radio signal prior to the nth slot. This means that the smoothed estimate on output 18 does not show such great variance as the output of the frequency offset estimator 12. However, the smoothed estimate is made more accurate than a simple average of the estimates from the frequency offset estimator.

Critically, the frequency estimate smoother 16 provides an estimate which can be used from the time of receipt of the first slot of received data onwards, but which does not show excessive variance from slot to slot. This smoother therefore avoids two of the drawbacks recognisable in prior art arrangements.

The frequency estimate smoother 16 can be adapted to compensate the smoothed estimate of frequency offset with weighted estimates of the frequency offsets which were fed back in the feedback loop 24, 26 in response to slots of the received radio signal prior to the nth slot. These weights determine the extent to which the present value output by the frequency estimate smoother 16 for the nth received slot depends on the frequency estimates derived for slots received earlier.

The frequency estimate smoother 16 can be adapted to provide a value $y_n$ as the smoothed estimate of frequency offset in response to receiving the estimate of the frequency offset of the nth slot, where

$$\mathrm{yn} = \left(\sum_{i=0}^{n} x_i - n f_{n-1} + \sum_{i=0}^{n-2} f_i\right) \Big/ (n+1)$$

Here $x_i$ is the ith estimate of the frequency offset, and $f_i$ is the ith frequency output of oscillator 26 in the feedback loop.

The frequency synchronisation circuit 10 lends itself to various arrangements for discontinuing the generation of smoothed estimates of frequency offset and transitioning to a mode of merely tracking the received signal using the tracking loop. For instance, the circuit may include means for measuring the short-term average of the value of the estimate of the frequency offset. These means then provide for turning off the estimate smoother 16 when the measured average value is less than a threshold value.

However, the frequency synchronisation circuit 10 may include means for measuring the time elapsed since reception of the first slot of data in the received radio signal, and for turning off the frequency estimate smoother 16 when the elapsed time exceeds a pre-determined period. Another arrangement for ensuring the transition from acquisition to tracking mode may comprise means for turning off the frequency estimate smoother 16 when a certain number of slots of data have been received. This can be done with a simple counter. When n exceeds a pre-determined number, the circuit switches from acquisition mode to tracking mode.

The frequency synchronisation circuit of the invention can be employed to advantage in a radio receiver, particularly a mobile or a portable radio receiver. Advantageously, the circuit may be employed in a TETRA compliant radio system. It can also be employed in a mobile telephone system.

Clearly, the arrangement outlined above operates in accordance with a method which differs from those known in the prior art. Figure 3 illustrates a method in accordance with the invention in the form of a flow-chart.

The method of frequency synchronisation for digital radio communications illustrated in figure 3 comprises, firstly, estimating at step 50 the frequency offset of a slot of data in the received radio signal. The slot of data is slot number n in the sequence of slots of data in the received radio signal. The estimating step 50 provides an estimate of the frequency offset of the nth slot of data in the received radio signal.

Step 52 of the method comprises smoothing the estimate of the frequency offset of the nth slot of data in the received radio signal. This provides a smoothed estimate of frequency offset. The smoothed estimate of frequency offset is fed forward to frequency corrector 20.

In step 54 of the method, frequency corrector 20 corrects the frequency of the nth slot of data of the received signal, using the smoothed estimate of frequency offset resulting from step 52.

The method of the invention also comprises feeding back the estimate of the frequency offset via a feedback loop 24, 26 to a multiplier 28. See step 56. The output of the multiplier provides the input to the frequency offset estimator 12.

In accordance with the invention, step 52 comprises compensating for estimates of the frequency offset fed back in the feedback loop 24, 26 in response to slots of the received radio signal prior to the nth slot.

Step 52 of smoothing the estimate of frequency offset may comprise compensating with weighted estimates of the frequency offset which have been fed back in the circuit's feedback loop 24, 26 in response to slots of the received radio signal prior to the nth slot.

Step 52 of smoothing the estimate of frequency offset may provide a value $y_n$ as the smoothed estimate of frequency offset in response to receiving the estimate of the frequency offset of the nth slot, where

$$\mathrm{yn} = \left(\sum_{i=0}^{n} x_i - n f_{n-1} + \sum_{i=0}^{n-2} f_i\right) \Big/ (n+1)$$

Here $x_i$ is the ith estimate of the frequency offset, and $f_i$ is the ith frequency output of oscillator 26 in the feedback loop.

Various steps may be employed to decide when to discontinue the generation of estimates, and transition to a mode of merely tracking the received signal using the tracking loop. This step has not been illustrated in figure 3, in order to keep the figure simple. For example, the method may comprise measuring the short-term average of the value of the estimate of the frequency offset, and turning off the frequency estimate smoother 16 when the measured average value is less than a pre-determined threshold value.

Two other alternative steps that the method of the invention may include for deciding when to discontinue the generation of estimates, and transition to a mode of tracking the received signal, are:

(i) measuring the time elapsed since reception of the first slot of data in the received radio signal, and turning off the frequency estimate smoother 16 when the elapsed time exceeds a pre-determined period; and

(ii) using a counter to count the number of slots of the radio signal which have been received, and turning off the frequency estimate smoother 16 when n exceeds a pre-determined number.

The invention provides a frequency synchronisation circuit 10 and an algorithm 50-56 for the operation of the circuit. The invention particularly comprises a frequency estimate smoother 16, which has advantages for hand-over between a signal acquisition mode and a tracking mode of a radio unit that is tracking a radio carrier subject to a frequency offset. The invention facilitates optimum automatic frequency control in the radio receiver.

Looking in greater detail at the function of the invention, the invention allows the feedback loop of the frequency synchronisation circuit to operate and draw the signal into the centre of the receiver's matched filter 30, and simultaneously also smoothes the estimates for the feed-forward correction. However, this is not a straightforward task. This is because the frequency offset of the received signal is changing from slot to slot as the tracking loop pulls in to lock.

If the frequency synchronisation circuit were to calculate only a simple average of the estimates for the feed-forward correction, such an average would average out the acquisition of the tracking loop as well as the noise. The averaged estimate would lag behind the true estimate. For this reason, the correction made would not be accurate.

The invention allows the tracking loop to pull in from the first slot, but to apply a smoothed estimate as the feed-forward correction. The calculation of the smoothed estimate is not simply the average of the individual estimates, as the individual estimates of frequency offset will reduce as the loop pulls-in. The smoother is designed to give a smoothed feed-forward estimate that compensates for the correction already made in the feedback loop.

A detailed example of a smoothing algorithm which can perform the invention is one operating in accordance with the following equation. Let $x_i$ be the ith estimate of the frequency offset, and $f_i$ be the ith frequency output of the oscillator in the feedback loop. Then the nth smoothed estimate that is applied as a feed-forward correction to the nth slot of data is given by:

$$\mathrm{yn} = \left(\sum_{i=0}^{n} x_i - n f_{n-1} + \sum_{i=0}^{n-2} f_i\right) \Big/ (n+1)$$

Simulations have shown that the variance of the estimate reduces as a factor of n.

The estimate need only be calculated during the phase when the synchronisation circuit is moving towards

achieving synchronisation with the received signal. When synchronisation has been achieved, the estimate is no longer of use. Therefore the feed-forward estimate is discontinued when the receiver is switched to tracking mode.

The circuit and method of the invention provide substantial technical benefit. This is because the feed-forward estimates applied before switching to tracking mode become increasingly more accurate, and the received signal is drawn into the centre of the matched filter 30. Because of this, the probability of decoding the data correctly increases for each slot received. Hence, the overall probability of correctly setting up the call increases. It may take several seconds before the circuit 10 actually switches to tracking mode, however before this time has elapsed the invention ensures that received data is decoded as soon as possible.

The frequency estimate smoother 16, and hence the radio receiver, have better performance than the conventional techniques outlined in the 'Background' section above. The receiving subscriber will have a better chance of decoding at least one of the call set up slots correctly. The advantages of the invention are particularly applicable to mobile subscribers performing automatic frequency control when operating in direct mode.

## Claims

**1.** A frequency synchronisation circuit (10) for a digital radio communications system, the frequency synchronisation circuit comprising:

(i) a frequency offset estimator (12), supplied with a received radio signal, for providing an estimate of the frequency offset of a slot of data in the received radio signal, the slot of data being slot number n in a sequence of slots of data in the received radio signal;

(ii) a frequency estimate smoother (16), connected to the frequency offset estimator and receiving the estimate of the frequency offset of the n th slot of data in the received radio signal, for providing a smoothed estimate of frequency offset;

(iii) a frequency corrector (20), connected to the frequency estimate smoother, the frequency estimate smoother feeding forward the smoothed estimate of frequency offset to the frequency corrector, for correcting the frequency of the nth slot of data;

(iv) a feedback loop, connected to the frequency offset estimator, for feeding back the estimate of the frequency offset via a filter (24) to a multiplier (28), the multiplier also receiving the received radio signal;

(v) the output of the multiplier (28) providing the input to the frequency offset estimator;

wherein the frequency estimate smoother (16) is adapted to compensate the smoothed estimate of frequency offset for estimates of the frequency offset fed back in the feedback loop in response to slots of the received radio signal prior to the nth slot.

**2.** A frequency synchronisation circuit in accordance with claim 1,
wherein the frequency estimate smoother (16) is adapted to compensate the smoothed estimate of frequency offset with weighted estimates of the frequency offset fed back in the feedback loop in response to slots of the received radio signal prior to the nth slot.

**3.** A frequency synchronisation circuit in accordance with claim 1 or claim 2, wherein the frequency estimate smoother (16) is adapted to provide, in response to receiving the estimate of the frequency offset of the nth slot, a value $y_n$ as the smoothed estimate of frequency offset, where

$$yn = \left(\sum_{i=0}^{n} x_i - nf_{n-1} + \sum_{i=0}^{n-2} f_i\right) \Big/ (n+1)$$

$x_i$ being the ith estimate of the frequency offset, and $f_i$ being the ith frequency output of an oscillator (26) in the

feedback loop.

**4.** A frequency synchronisation circuit in accordance with any previous claim, further comprising means for measuring the short-term average of the value of the estimate of the frequency offset, and for turning off the estimate smoother (16) when the measured average value is less than a threshold value.

**5.** A frequency synchronisation circuit in accordance with any previous claim, further comprising means for measuring the time elapsed since reception of the first slot of data in the received radio signal, and for turning off the estimate smoother (16) when the elapsed time exceeds a pre-determined period.

**6.** A frequency synchronisation circuit in accordance with any previous claim, further comprising means for turning off the estimate smoother (16) when n exceeds a pre-determined number.

**7.** A radio receiver comprising a frequency synchronisation circuit in accordance with any previous claim.

**8.** A method of frequency synchronisation for digital radio communications, the method of frequency synchronisation comprising:

(i) estimating (50) the frequency offset of a slot of data in a received radio signal, the slot of data being slot number n in a sequence of slots of data in the received radio signal, to provide an estimate of the frequency offset of the nth slot of data in the received radio signal;

(ii) smoothing (52) the estimate of the frequency offset of the nth slot of data in the received radio signal, to provide a smoothed estimate of frequency offset;

(iii) feeding forward (54) the smoothed estimate of frequency offset to a frequency corrector, for correcting the frequency of the nth slot of data;

(iv) in a feedback loop, connected to the frequency offset estimator, feeding back (56) the estimate of the frequency offset via a filter (24) to a multiplier (28), the multiplier also receiving the received radio signal, the output of the multiplier providing the input to the frequency offset estimator (12);

wherein the step of smoothing the estimate of frequency offset comprises compensating for estimates of the frequency offset fed back in the feedback loop in response to slots of the received radio signal prior to the nth slot.

**9.** A method of frequency synchronisation in accordance with claim 8, wherein the step of smoothing the estimate (52) of frequency offset comprises compensating with weighted estimates of the frequency offset having been fed back in the feedback loop in response to slots of the received radio signal prior to the nth slot.

**10.** A method of frequency synchronisation in accordance with claim 8 or claim 9, wherein the step of smoothing the estimate (52) of frequency offset provides a value $y_n$ as the smoothed estimate of frequency offset in response to receiving the estimate of the frequency offset of the nth slot, where

$$yn = \left(\sum_{i=0}^{n} x_i - nf_{n-1} + \sum_{i=0}^{n-2} f_i\right) \Big/ (n+1)$$

$x_i$ being the ith estimate of the frequency offset, and $f_i$ being the ith frequency output of an oscillator in the feedback loop.

**11.** A method of frequency synchronisation in accordance with any of claims 8-10, further comprising measuring the short-term average of the value of the estimate of the frequency offset, and turning off the estimate smoother (16) when the measured average value is less than a pre-determined threshold value.

**12.** A method of frequency synchronisation in accordance with any of claims 8-11, further comprising measuring the time elapsed since reception of the first slot of data in the received radio signal, and turning off the estimate smoother (16) when the elapsed time exceeds a pre-determined period.

**13.** A method of frequency synchronisation in accordance with any of claims 8-12, further comprising turning off the estimate smoother (16) when n exceeds a pre-determined number.

**Patentansprüche**

**1.** Frequenzsynchronisationsschaltung (10) für ein digitales Funkkommunikationssystem, wobei die Frequenzsynchronisationsschaltung umfasst:

(i) einen Frequenz-Offset-Abschätzer (12), der mit einem empfangenen Funksignal versorgt wird, zum Bereitstellen einer Abschätzung des Frequenz-Offsets eines Datenslots in dem empfangenen Funksignal, wobei der Datenslot der Slot mit der Nummer n in einer Folge von Datenslots in dem empfangenen Funksignal ist;
(ii) einen Frequenzabschätzungsglätter (16), der mit dem Frequenz-Offset-Abschätzer verbunden ist und die Abschätzung des Frequenz-Offsets des n-ten Datenslots in dem empfangenen Funksignal empfängt, zum Bereitstellen einer geglätteten Abschätzung des Frequenz-Offsets;
(iii) einen Frequenzkorrigierer (20), der mit dem Frequenzabschätzungsglätter verbunden ist, wobei der Frequenzabschätzungsglätter die geglättete Abschätzung des Frequenz-Offsets an den Frequenzkorrigierer weiterleitet, zum Korrigieren der Frequenz des n-ten Datenslots;
(iv) eine Rückkopplungsschleife, die mit dem Frequenz-Offset-Abschätzer verbunden ist, zum Zurückführen der Abschätzung des Frequenz-Offsets über einen Filter (24) an einen Vervielfacher (28), wobei der Vervielfacher auch das empfangene Funksignal empfängt;
(v) wobei die Ausgabe des Vervielfachers (28) die Eingabe für den Frequenz-Offset-Abschätzer zur Verfügung stellt;

wobei der Frequenzabschätzungsglätter (16) geeignet ist, die geglättete Abschätzung des Frequenz-Offsets für Abschätzungen des in der Rückkopplungsschleife zurückgeführten Frequenz-Offsets in Abängigkeit von Slots des empfangenen Funksignals vor dem n-ten Slot zu kompensieren.

**2.** Frequenzsynchronisationsschaltung nach Anspruch 1, wobei der Frequenzabschätzungsglätter (16) geeignet ist, die geglättete Abschätzung des Frequenz-Offsets mit gewichteten Abschätzungen des in der Rückkopplungsschleife zurückgeführten Frequenz-Offsets in Abhängigkeit von Slots des empfangenen Funksignals vor dem n-ten Slot zu kompensieren.

**3.** Frequenzsynchronisationsschaltung nach Anspruch 1 oder 2, wobei der Frequenzabschätzungsglätter (16) geeignet ist, in Abhängigkeit auf das Empfangen der Abschätzung des Frequenz-Offsets des n-ten Slots einen Wert $y_n$ als die geglättete Abschätzung des Frequenz-Offsets zur Verfügung zu stellen, wobei

$$yn = \left(\sum_{i=0}^{n} x_i - nf_{n-1} + \sum_{i=0}^{n-2} f_i\right) \Big/ (n+1)$$

wobei $x_i$ die i-te Abschätzung des Frequenz-Offsets ist und $f_i$ die i-te Frequenzausgabe eines Oszillators (26) in der Rückkopplungsschleife ist.

**4.** Frequenzsynchronisationsschaltung nach einem der vorhergehenden Ansprüche, die weiterhin Mittel zum Messen des kurzfristigen Durchschnitts des Werts der Abschätzung des Frequenz-Offsets und zum Ausschalten des Abschätzungsglätters (16), wenn der gemessene Durchschnittswert geringer ist als ein Schwellenwert, aufweist.

**5.** Frequenzsynchronisationsschaltung nach einem der vorhergehenden Ansprüche, die weiterhin Mittel zum Messen der seit dem Empfang des ersten Datenslots in dem empfangenen Funksignal abgelaufenen Zeit und zum Ausschalten des Abschätzungsglätters (16), wenn die abgelaufene Zeit eine vorbestimmte Dauer überschreitet, aufweist.

**6.** Frequenzsynchronisationsschaltung nach einem der vorhergehenden Ansprüche, die weiterhin Mittel zum Ausschalten des Abschätzungsglätters (16), wenn n eine vorbestimmte Anzahl überschreitet, aufweist.

**7.** Funkempfänger mit einer Frequenzsynchronisationsschaltung in Übereinstimmung mit irgendeinem der vorangehenden Ansprüche.

**8.** Verfahren zur Frequenzsynchronisierung zur digitalen Funkkommunikation, wobei das Verfahren zur Frequenzsynchronisierung umfasst:

(i) Abschätzen (50) des Frequenz-Offsets eines Datenslots in einem empfangenen Funksignal, wobei der Datenslot der Slot mit der Nummer n in einer Folge von Datenslots in dem empfangenen Funksignal ist, zum Bereitstellen einer Abschätzung des Frequenz-Offsets des n-ten Datenslots in dem empfangenen Funksignal;
(ii) Glätten (52) der Abschätzung des Frequenz-Offsets des n-ten Datenslots in dem empfangenen Funksignal, um eine geglättete Abschätzung des Frequenz-Offsets zur Verfügung zu stellen;
(iii) Weiterleiten (54) der geglätteten Abschätzung des Frequenz-Offsets an einen Frequenzkorrigierer, um die Frequenz des n-ten Datenslots zu korrigieren;
(iv) Zurückführen der Abschätzung des Frequenz-Offsets über einen Filter (24) an einen Vervielfacher (28) in einer Rückkopplungsschleife, die mit dem Frequenz-Offset-Abschätzer verbunden ist, wobei der Vervielfacher auch das empfangene Funksignal empfängt und die Ausgabe des Vervielfachers die Eingabe für den Frequenz-Offset-Abschätzer (12) zur Verfügung stellt;

wobei der Schritt des Glättens der Abschätzung des Frequenz-Offsets das Kompensieren der Abschätzungen des in der Rückkopplungsschleife zurückgeführten Frequenz-Offsets in Abhängigkeit von Slots des empfangenen Funksignals vor dem n-ten Slot aufweist.

**9.** Verfahren zur Frequenzsynchronisierung nach Anspruch 8, wobei der Schritt des Glättens der Abschätzung (52) des Frequenz-Offsets das Kompensieren mit gewichteten Abschätzungen des in der Rückkopplungsschleife zurückgeführten Frequenz-Offsets umfasst, in Abhängigkeit von Slots des empfangenen Funksignals vor dem n-ten Slot.

**10.** Verfahren zur Frequenzsynchronisierung nach Anspruch 8 oder 9, wobei der Schritt des Glättens der Abschätzung (52) des Frequenz-Offsets einen Wert $y_n$ als die geglättete Abschätzung des Frequenz-Offsets in Abhängigkeit von dem Empfangen der Abschätzung des Frequenz-Offsets des n-ten Slots umfasst, wobei

$$yn = \left( \sum_{i=0}^{n} x_i - nf_{n-1} + \sum_{i=0}^{n-2} f_i \right) \Big/ (n+1)$$

wobei $x_i$ die i-te Abschätzung des Frequenz-Offsets ist und $f_i$ die i-te Frequenzausgabe eines Oszillators in der Rückkopplungsschleife ist.

**11.** Verfahren zur Frequenzsynchronisierung nach einem der Ansprüche 8 bis 10, das weiterhin das Messen des kurzfristigen Durchschnitts des Werts der Abschätzung des Frequenz-Offsets und das Abschalten des Abschätzungsglätters (16), wenn der gemessene Durchschnittswert geringer als ein vorbestimmter Schwellenwert ist, aufweist.

**12.** Verfahren zur Frequenzsynchronisierung nach einem der Ansprüche 8 bis 11, das weiterhin das Messen der abgelaufenen Zeit seit dem Empfang des ersten Datenslots in dem empfangenen Funksignal und das Ausschalten des Abschätzungsglätters (16), wenn die abgelaufene Zeit eine vorbestimmte Dauer überschreitet, aufweist.

**13.** Verfahren zur Frequenzsynchronisierung nach einem der Ansprüche 8 bis 12, das weiterhin das Ausschalten des Abschätzungsglätters (16) umfasst, wenn n eine vorbestimmte Anzahl überschreitet.

## Revendications

1. Circuit (10) de synchronisation de fréquence destiné à un système de communications radioélectriques numériques, le circuit de synchronisation de fréquence comprenant :

   (i) un estimateur (12) de décalage de fréquence, auquel est fourni un signal radio reçu, afin de produire une estimation du décalage de fréquence d'une tranche de données du signal radio reçu, la tranche de données étant la tranche qui porte le numéro n dans une séquence de tranches de données du signal radio reçu ;
   (ii) un moyen (16) de lissage d'estimation de fréquence, connecté à l'estimateur de décalage de fréquence et recevant l'estimation du décalage de fréquence de la $n^{ème}$ tranche de données du signal radio reçu, afin de produire une estimation lissée du décalage de fréquence ;
   (iii) un correcteur de fréquence (20), connecté au moyen de lissage d'estimation de fréquence, le moyen de lissage d'estimation de fréquence envoyant l'estimation lissée du décalage de fréquence au correcteur de fréquence, afin de corriger la fréquence de la $n^{ème}$ tranche de données ;
   (iv) une boude de réaction, connectée à l'estimateur de décalage de fréquence, afin de renvoyer l'estimation du décalage de fréquence, via un filtre (24), à un multiplicateur (28), le multiplicateur recevant également le signal radio reçu ;
   (v) la sortie du multiplicateur (28) produisant le signal d'entrée appliqué à l'estimateur de décalage de fréquence ;

   où le moyen (16) de lissage d'estimation de fréquence étant conçu pour compenser l'estimation lissée du décalage de fréquence relativement aux estimations du décalage de fréquence renvoyées dans la boucle de réaction en réponse aux tranches du signal radio reçu se trouvant avant la $n^{ème}$ tranche.

2. Circuit de synchronisation de fréquence selon la revendication 1, où le moyen (16) de lissage d'estimation de fréquence est conçu pour compenser l'estimation lissée du décalage de fréquence au moyen d'estimations pondérées du décalage de fréquence renvoyées dans la boucle de réaction en réponse aux tranches du signal radio reçu se trouvant avant la $n^{ème}$ tranche.

3. Circuit de synchronisation de fréquence selon la revendication 1 ou 2, où le moyen (16) de lissage d'estimation de fréquence est conçu pour reproduire, en réponse à la réception de l'estimation du décalage de fréquence de la $n^{ème}$ tranche, une valeur $y_n$ faisant fonction de l'estimation lissée de décalage de fréquence, où :

$$Y_n = \frac{\left( \sum_{i=0}^{n} x_i - n f_{n-1} + \sum_{i=0}^{n-2} f_i \right)}{(n+1)}$$

   $x_i$ étant la $i^{ème}$ estimation du décalage de fréquence, et $f_i$ étant le $i^{ème}$ signal de sortie de fréquence d'un oscillateur (26) présent dans la boucle de réaction.

4. Circuit de synchronisation de fréquence selon l'une quelconque des revendications précédentes, comprenant en outre un moyen servant à mesurer la moyenne à court terme de la valeur de l'estimation du décalage de fréquence et à interrompre le fonctionnement du moyen (16) de lissage d'estimation lorsque la valeur moyenne mesurée est inférieure à une valeur de seuil.

5. Circuit de synchronisation de fréquence selon l'une quelconque des revendications précédentes, comprenant en outre un moyen qui sert à mesurer le temps écoulé depuis la réception de la première tranche de données du signal radio reçu et à interrompre le fonctionnement du moyen (16) de lissage d'estimation lorsque le temps écoulé dépasse une durée prédéterminée.

6. Circuit de synchronisation de fréquence selon l'une quelconque des revendications précédentes, comprenant en outre un moyen qui sert à interrompre le fonctionnement du moyen (16) de lissage d'estimation lorsque le nombre n dépasse une valeur prédéterminée.

7. Récepteur radio comprenant un circuit de synchronisation de fréquence tel que défini dans l'une quelconque des

revendications précédentes.

**8.** Procédé de synchronisation de fréquence destiné aux communications radioélectriques numériques, le procédé de synchronisation de fréquence comprenant les opérations suivantes :

(i) estimer (50) le décalage de fréquence d'une tranche de données d'un signal radio reçu, la tranche de données étant la tranche qui porte le numéro n dans une séquence de tranches de données du signal radio reçu, afin de produire une estimation du décalage de fréquence de la $n^{\text{ème}}$ tranche de données du signal radio reçu ;
(ii) lisser (52) l'estimation du décalage de fréquence de la $n^{\text{ème}}$ tranche de données du signal radio reçu afin de produire une estimation lissée du décalage de fréquence ;
(iii) envoyer (54) l'estimation lissée du décalage de fréquence à un correcteur de fréquence, afin de corriger la fréquence de la $n^{\text{ème}}$ tranche de données ;
(iv) dans une boucle de réaction, connectée à l'estimateur de décalage de fréquence, renvoyer (56) l'estimation du décalage de fréquence, via un filtre (24), à un multiplicateur (28), le multiplicateur recevant également le signal radio reçu, la sortie du multiplicateur produisant le signal d'entrée appliqué à l'estimateur de décalage de fréquence (12) ;

où l'opération de lissage de l'estimation du décalage de fréquence comprend la compensation relative aux estimations du décalage de fréquence renvoyées dans la boude de réaction en réponse à des tranches du signal radio reçu se trouvant avant la $n^{\text{ème}}$ tranche.

**9.** Procédé de synchronisation de fréquence selon la revendication 8, où l'opération de lissage de l'estimation (52) du décalage de fréquence comprend la compensation avec des estimations pondérées du décalage de fréquence qui ont été renvoyées dans la boucle de réaction en réponse à des tranches du signal radio reçu se trouvant avant la $n^{\text{ème}}$ tranche.

**10.** Procédé de synchronisation de fréquence selon la revendication 8 ou 9, où l'opération de lissage de l'estimation (52) du décalage de fréquence produit une valeur $y_n$ faisant fonction de l'estimation lissée du décalage de fréquence en réponse à la réception de l'estimation du décalage de fréquence de la $n^{\text{ème}}$ tranche, où

$$Y_n = \frac{\left(\sum_{i=0}^{n} x_i - nf_{n-1} + \sum_{i=0}^{n=2} f_i\right)}{(n+1)}$$

$x_i$ étant la $i^{\text{ème}}$ estimation du décalage de fréquence, et $f_i$ étant le $i^{\text{ème}}$ signal de sortie de fréquence d'un oscillateur se trouvant dans la boucle de réaction.

**11.** Procédé de synchronisation de fréquence selon l'une quelconque des revendications 8 à 10, comprenant en outre la mesure de la moyenne à court terme de la valeur de l'estimation du décalage de fréquence et l'interruption du fonctionnement du moyen (16) de lissage d'estimation lorsque la valeur moyenne mesurée est inférieure à une valeur de seuil prédéterminée.

**12.** Procédé de synchronisation de fréquence selon l'une quelconque des revendications 8 à 11, comprenant en outre la mesure du temps écoulé depuis la réception de la première tranche de données du signal radio reçu et l'interruption du fonctionnement du moyen (16) de lissage d'estimation lorsque le temps écoulé dépasse une durée prédéterminée.

**13.** Procédé de synchronisation de fréquence selon l'une quelconque des revendications 8 à 12, comprenant en outre l'interruption du fonctionnement du moyen (16) de lissage d'estimation lorsque le nombre n dépasse une valeur prédéterminée.

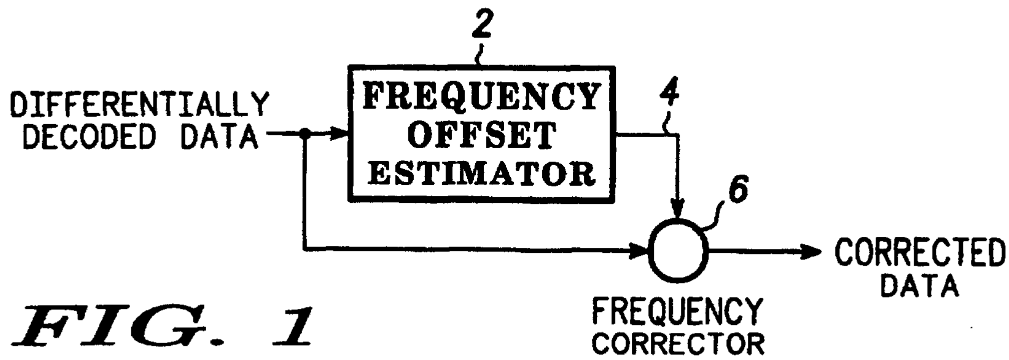
2
DIFFERENTIALLY DECODED DATA
FREQUENCY OFFSET ESTIMATOR
4
6
CORRECTED DATA
FREQUENCY CORRECTOR

FIG. 1

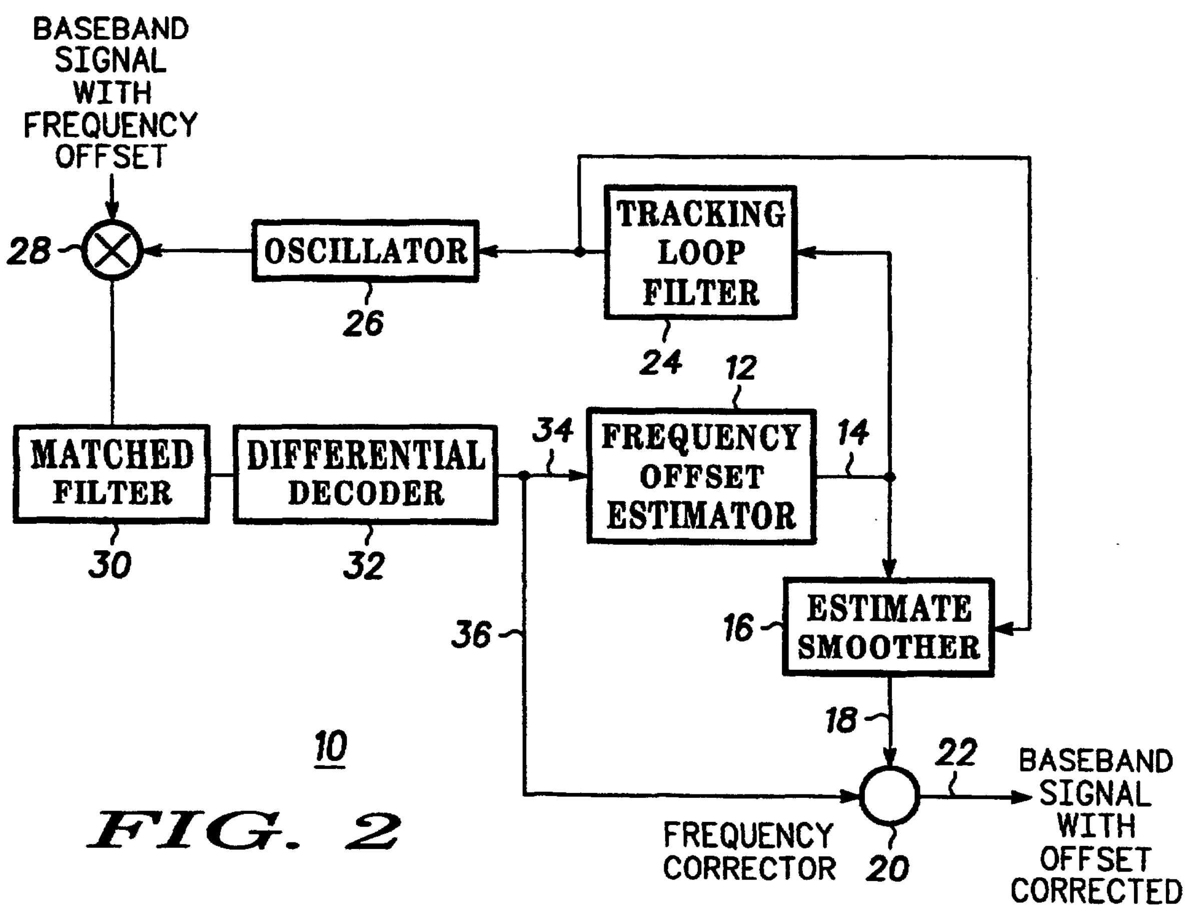
BASEBAND SIGNAL WITH FREQUENCY OFFSET
28
OSCILLATOR
26
TRACKING LOOP FILTER
24
12
MATCHED FILTER
30
DIFFERENTIAL DECODER
32
34
FREQUENCY OFFSET ESTIMATOR
14
36
16
ESTIMATE SMOOTHER
18
10
22
BASEBAND SIGNAL WITH OFFSET CORRECTED
FREQUENCY CORRECTOR
20

FIG. 2

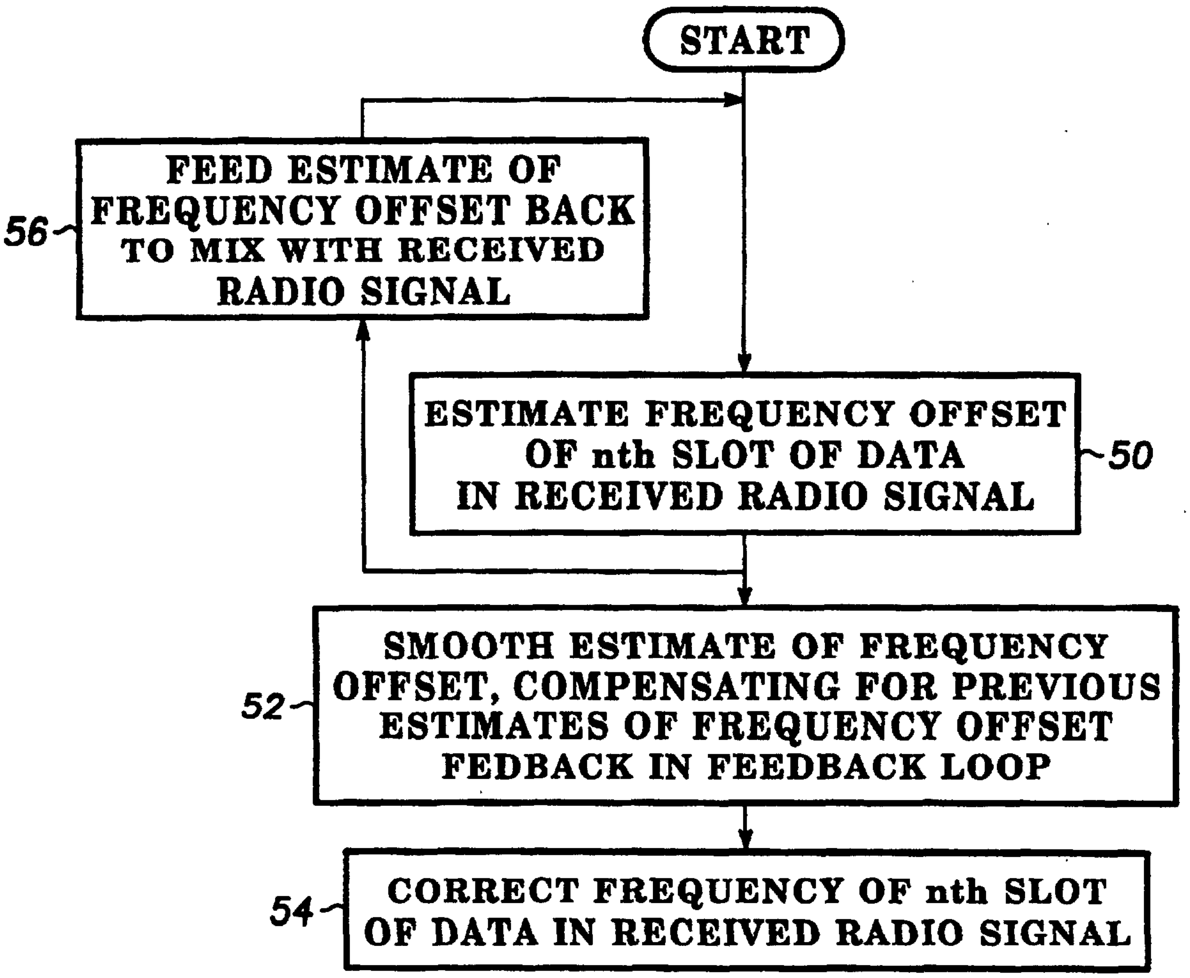
START
FEED ESTIMATE OF FREQUENCY OFFSET BACK TO MIX WITH RECEIVED RADIO SIGNAL
56
ESTIMATE FREQUENCY OFFSET OF nth SLOT OF DATA IN RECEIVED RADIO SIGNAL
50
SMOOTH ESTIMATE OF FREQUENCY OFFSET, COMPENSATING FOR PREVIOUS ESTIMATES OF FREQUENCY OFFSET FEDBACK IN FEEDBACK LOOP
52
CORRECT FREQUENCY OF nth SLOT OF DATA IN RECEIVED RADIO SIGNAL
54

FIG. 3